**Europäisches Patentamt**

**European Patent Office**

**Office européen des brevets**

(19)

(11) Numéro de publication: **0 077 697 B1**

(12) **FASCICULE DE BREVET EUROPEEN**

(45) Date de publication du fascicule du brevet: **19.06.85**

(51) Int. Cl.⁴: **B 60 K 15/02**

(21) Numéro de dépôt: **82401642.2**

(22) Date de dépôt: **09.09.82**

(54) **Dispositif de fixation d'un réservoir sur une structure porteuse.**

(30) Priorité: **16.10.81 FR 8119472**

(43) Date de publication de la demande:
**27.04.83 Bulletin 83/17**

(45) Mention de la délivrance du brevet:
**19.06.85 Bulletin 85/25**

(84) Etats contractants désignés:
**DE GB IT**

(56) Documents cités:
**DE - U - 1 952 708**
**GB - A - 323 106**
**US - A - 3 286 871**
**US - A - 3 330 439**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Condet, Claude, 54 Rue Corneille, F-78360 Montesson (FR)**

(74) Mandataire: **Moncheny, Michel et al, c/o Cabinet Lavoix 2 Place d'Estienne d'Orves, F-75441 Paris Cedex 09 (FR)**

## Description

La présente invention se rapporte à un dispositif de fixation d'un réservoir sur une structure porteuse du type comprenant, sur un premier côté du réservoir, au moins une première oreille plane qui est pourvue d'un trou destiné au passage d'un organe fileté en vue de son immobilisation par boulonnage sur la structure. Elle s'applique plus particulièrement à la fixation d'un réservoir à carburant en matière synthétique sur la structure d'un véhicule automobile.

La fixation sur la structure d'un véhicule automobile d'un réservoir en matière synthétique nécessite des précautions particulières qui entraînent des complications notables et conduisent à un prix de revient plus élevé, par rapport à la fixation d'un réservoir en tôle qui se fait simplement à l'aide de vis et d'écrous ou de profiles en V (voir le brevet GB 323 106, qui montre un exemple de dispositif du type précité).

L'invention a pour but de remédier à ces inconvénients en proposant un dispositif de fixation particulièrement simple, donc facile à mettre en œuvre et d'un bas prix de revient qui soit applicable à la fixation des réservoirs à carburant en matière synthétique.

A cet effet, le dispositif de fixation suivant l'invention est caractérisé en ce qu'il comprend, sur le côté opposé du réservoir, au moins une deuxième oreille courbe qui tourne sa convaté dans le sens opposé à la structure et qui est reçue dans une fente arquée conjuguée appartenant à une agrafe montée sur cette structure.

Un exemple de réalisation fait l'objet de la description qui suit, en référence aux dessins joints sur lesquels:

la Fig. 1 est une vue partielle en plan d'un réservoir fixé selon l'invention;

la Fig. 2 est une vue en coupe selon la ligne 2-2 de la Fig. 1;

Les Fig. 3 et 4 représentent à plus grande échelle des détails de la fig. 2.

On voit sur les dessins un réservoir à carburant 1 en matière synthétique, par exemple en polyéthylène haute densité. Sur l'un des côtés du réservoir, par exemple le côté 2 dirigé vers l'avant en considérant le véhicule, sont formées des oreilles 3 constituées par des voiles de forme courbe, à concavité tournée vers le bas. Sur de côté opposé 4 du réservoir sont ménagées des oreilles 5 planes.

Chaque oreille courbe 3 est destinée à s'engager dans une fente 6 de forme arquée conjuguée d'une agrafe 7 en matière plastique de forme générale en S. L'agrafe comporte ainsi au-dessous de la fente 6 une fente 8 permettant son clipage sur un support 9 faisant partie de la structure métallique 10 du véhicule. L'extrémité inférieure du S est prolongée vers les bas par un rebord 11 appliqué contre la partie de la structure 10 adjacente au support 9, la cornière ainsi formée étant renforcée par une ou plusieurs nervures verticales 12.

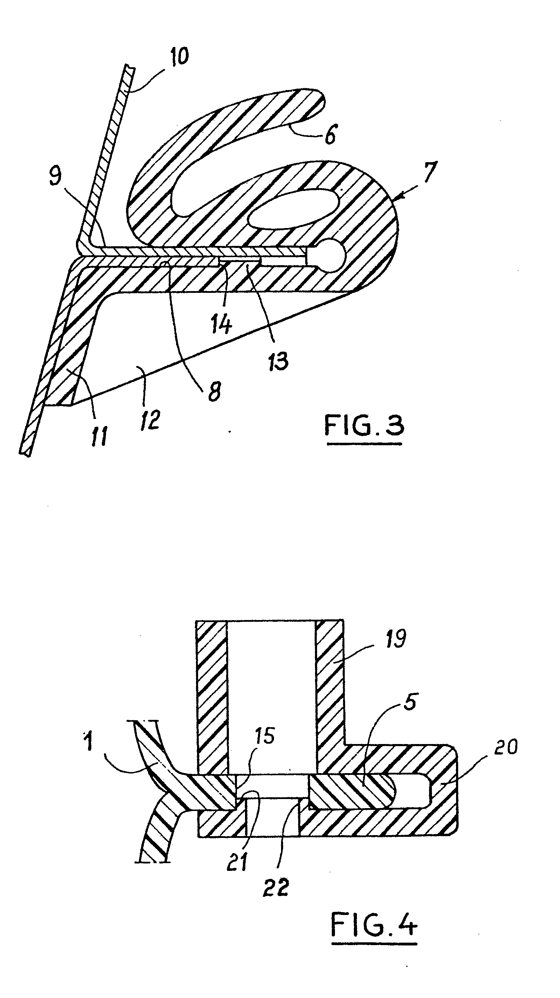

L'agrafe 7, représentée à plus grande échelle sur la Fig. 3, peut être réalisée par exemple en polyamide. Comme représenté, elle comporte de préférence, dans la fente 8, un téton 13 destiné à s'engager dans un trou conjugué 14 du support 9. Ceci assure le positionnement correct de l'agrafe 7 tout en garantissant son immobilisation.

Chaque oreille plane 5 comporte un trou oblong 15, allongé parallèlement au côté 4 du réservoir, qui est destiné à être traversé avec jeu par une vis verticale 16 en saillie vers le bas la structure 10. Dans l'exemple représenté, la vis 16 est rendue solidaire de la structure 10 par soudage de sa tête 17 sur cette dernière, et la fixation du réservoir est assurée, pour chaque oreille 5, par un écrou 18.

Une entretoise tubulaire 19 est interposée entre chaque oreille 5 et la structure 10. De préférence, cette entretoise, représentée à plus grande échelle sur la Fig. 4, fait corps avec un étrier 20 qui se clipe sur l'oreille 5 avec engagement d'un téton 21 dans le trou oblong 15 de l'oreille. L'ensemble entretoise-étrier peut être réalisé, par exemple, en polyamide. Le téton 21 est percé d'un trou central circulaire 22 dont le diamètre correspond à peu près à celui de la vis 16.

Le montage du réservoir dans le logement ouvert vers le bas qui est défini par la structure 10 entre le support 9 et la vis 16 se fait d'une façon particulièrement simple:

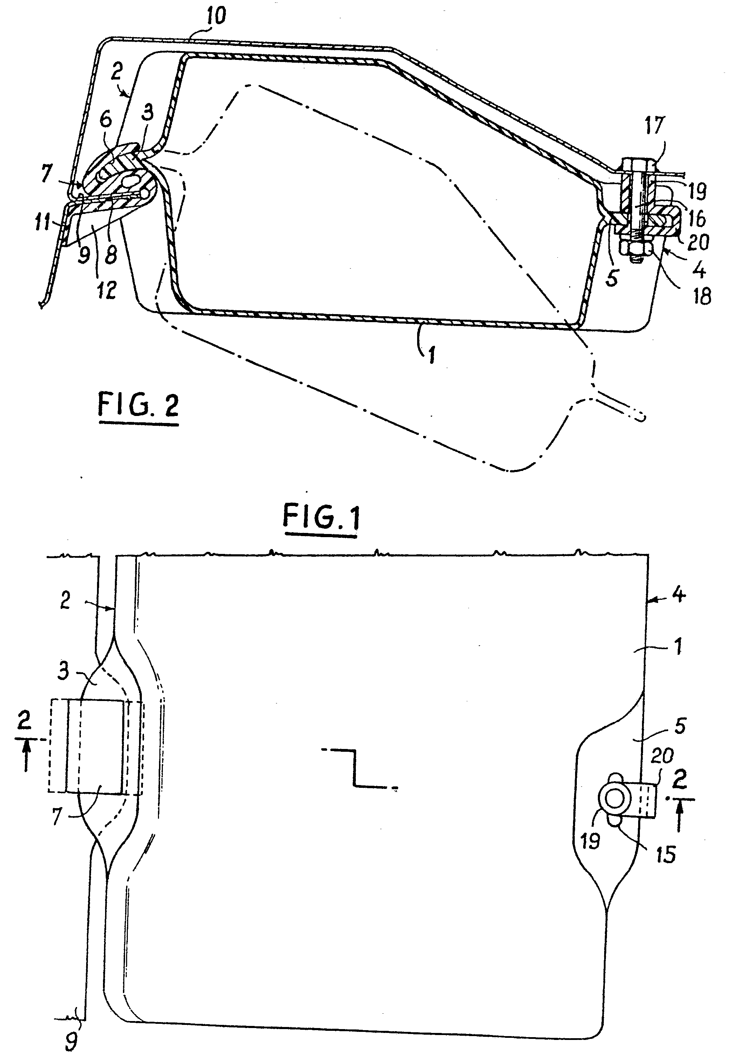

On met d'abord en place par clipage d'une part les agrafes 7 sur les supports 9, d'autre part les entretoises 19 sur les oreilles planes 5. On présente ensuite le réservoir dans la position inclinée vers le bas indiquée en traits mixtes sur la Fig. 2, et on fait glisser les oreilles courbes 3 jusqu'au fond des fentes 6 des agrafes tout en redressant progressivement le réservoir. Lorsque le réservoir a presque atteint sa position horizontale de service, les entretoises 19 s'enfilent sur les vis 16 jusqu'à buter sur la structure 10, les vis 16 dépassant alors sous les étres 20. Il suffit ensuite de mettre en place puis de serrer les écrous 18 pour assurer le maintien parfait du réservoir sur la structure du véhicule. Le démontage du réservoir s'effectue aussi facilement, en inversant l'ordre des opérations ci-dessus.

L'agencement ainsi décrit est particulièrement simple et bon marché. De plus, le réservoir 1 est parfaitement maintenu sans aucun contact avec les parties métalliques de la structure 10. On évite ainsi tout risque de détérioration par frottement matière plastique-métal de la matière plastique qui le constitue, et on assure l'isolement thermique entre la structure et le réservoir, retardant l'échauffement de ce dernier en cas d'incedie du véhicule.

## Revendications

1. Dispositif de fixation d'un réservoir sur une structure porteuse, notamment d'un réservoir à carburant surla structure d'un véhicule automobile, du type comprenant, sur un premier côté (4) du réservoir, aumoins une première oreille plane (5) qui est pourvue d'un trou (15) destiné au passage d'un organe fileté (16) en vue de son immobilisation par boulonnage sur la structure (10), caractérisé en ce qu'il comprend, sur le côté opposé (2) du réservoir (1), au moins une deuxième oreille courbe (3) qui tourne sa concavité dans le sens opposé à la structure (10) et qui est reçue dans une fente arquée conjuguée (6) appartement à une agrafe (7) montée sur cette structure.

2. Dispositif de fixation suivant la revendication 1, caractérisé en ce que l'agrafe (7) est clipée sur un support (9) qui fait de la structure (10).

3. Dispositif de fixation suivant l'une des revendications 1 et 2, caractérisé en ce que le trou (15) de la première oreille (5) est allongé parallèlement auxdits côtés (2, 4) du réservoir (1).

4. Dispositif de fixation suivant l'une quelconque des revendications 1 à 3, caractérisé en ce qu'une entretoise (19) est intercalée entre la structure (10) et la première oreille (5).

5. Dispositif de fixation suivant la revendication 4, caractérisé en ce que l'entretoise (19) est solidaire d'un étrier (20) clipé sur la première oreille (5) et traversé sans jeu par l'organe fileté (16).

6. Dispositif de fixation suivant l'une des revendications 4 et 5, caractérisé en ce que l'entretoise (19) est en matière plastique.

7. Dispositif de fixation suivant l'une quelconque des revendications 1 à 6, caractérisé en ce que l'agrafe (7) est en matière plastique.

**Patentansprüche**

1. Vorrichtung zum Befestigen eines Behälters auf einer Tragekonstruktion, insbesondere eines Kraftstoffbehälters auf der Tragekonstruktion eines Kraftfahrzeugs, wobei an einer Seite (4) des Behälters mindestens ein planer Lappen (5) mit einer Öffnung (15) zum Durchführen eines mit einem Gewinde versehenen Organs (16) zum Befestigen des Behälters mittels Verschraubung auf der Tragekonstruktion (10) vorgesehen ist, gekennzeichnet durch mindestens einen zweiten, auf der anderen Seite (2) des Behälters (1) angeordneten gekrümmten Lappen (3), dessen konkave Krümmung von der Tragekonstruktion (10) abgewandt ist, und der von einem entsprechend gekrümmten Schlitz (6) aufgenommen wird, der in einer auf der Tragekonstruktion angebrachten Klammer (7) eingearbeitet ist.

2. Vorrichtung nach Anspruch 1, dadurch gekennzeichnet, daß die Klammer (7) auf einen Träger (9) geklemmt ist, der ein Bestandteil der Tragekonstruktion (10) ist.

3. Vorrichtung nach Anspruch 1 oder 2, dadurch gekennzeichnet, daß die Öffnung (15) im ersten Lappen (5) ein Langloch ist, das sich parallel zu den Seiten (2, 4) des Behälters (1) erstreckt.

4. Vorrichtung nach einem der Ansprüche 1 bis 3, dadurch gekennzeichnet, daß zwischen der Tragekonstruktion (10) und dem ersten Lappen (5) ein Distanzstück (19) eingefügt ist.

5. Vorrichtung nach Anspruch 4, dadurch gekennzeichnet, daß das Distanzstück (19) mit einem Bügel (20) verbunden ist, der auf den ersten Lappen (5) aufgesteckt ist und von dem mit einem Gewinde versehenen Organ (16) ohne Spiel durchquert wird.

6. Vorrichtung nach Anspruch 4 oder 5, dadurch gekennzeichnet, daß das Distanzstück (19) aus Kunststoff ist.

7. Vorrichtung nach einem der Ansprüche 1 bis 6, dadurch gekennzeichnet, daß die Klammer (7) aus Kunststoff ist.

**Claims**

1. A device for fixing a tank to a supporting structure, in particular a fuel tank on the structure of a motor vehicle, of the type comprising, on a first side (4) of the tank, at least a planar first ear (5) which is provided with an aperture (15) for the passage of a screwthreaded element (16) for the purpose of holding the tank stationary by bolting on the structure (10), characterised in that it comprises, on the opposite side (2) of the tank (1), at least a curved second ear (3) which has its concavity facing away from the structure (10) and which is received in a conjugate arcuate slot (6) pertaining to a clip (7) mounted on this structure.

2. A fixing device according to claim 1, characterised in that the clip (7) is clipped on a support (9) which is part of the structure (10).

3. A fixing device according to claim 1 or 2, characterised in that the aperture (15) of the first ear (5) is elongated in a direction parallel to said sides (2, 4) of the tank (1).

4. A fixing device according to any one of the claims 1 to 3, characterised in that a spacer member (19) is interposed between the structure (10) and the first ear (5).

5. A fixing device according to claim 4, characterised in that the spacer member (19) is integral with a U-shaped member (20) which is clipped on the first ear (5) and through which the screwthreaded element (16) extends without clearance.

6. A fixing device according to claim 1 or 5, characterised in that the spacer member (19) is of plastics material.

7. A fixing device according to any one of the claims 1 to 6, characterised in that the clip (7) is of plastics material.

0 077 697

FIG. 2

FIG. 1

FIG. 3

FIG. 4